Europäisches Patentamt

European Patent Office

Office européen des brevets

(19)

(11) **EP 1 609 813 A1**

(12) **EUROPÄISCHE PATENTANMELDUNG**

(43) Veröffentlichungstag:
**28.12.2005 Patentblatt 2005/52**

(51) Int Cl.[7]: **C08J 7/04**, C08J 5/18

(21) Anmeldenummer: **05013096.2**

(22) Anmeldetag: **17.06.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **26.06.2004 DE 102004030978**

(71) Anmelder: **Mitsubishi Polyester Film GmbH
65203 Wiesbaden (DE)**

(72) Erfinder:
• **Klein, Oliver, Dr.
55126 Mainz (DE)**
• **Peiffer, Herbert, Dr. Professor
55126 Mainz (DE)**

(74) Vertreter: **Schweitzer, Klaus et al
Patentanwaltskanzlei Zounek,
Industriepark Kalle-Albert,
Gebäude H391
Rheingaustrasse 190-196
65174 Wiesbaden (DE)**

(54) **Haftvermittelnde Polyesterfolie enthaltend Poly(m-xylol-adipinamid)**

(57) Polyesterfolien, welche neben thermoplastischem Polyester wie z. B. Polyethylenterephthalat 5-45 Gew.-% Poly(m-xylol-adipinamid) und 0,02 bis 1 Gew.-% an Füllstoffen enthalten, mindestens eine haftvermittelnde Oberfläche bzw. Beschichtung aufweisen und nach dem sequenziellen Streckverfahren hergestellt werden, zeichnen sich durch verbesserte mechanische Eigenschaften wie einen Elastizitätsmodul von größer als 3500 N/mm[2] in beiden Orientierungsrichtungen, einen hohen Glanz, eine geringe Trübung und durch sehr gute Barriereeigenschaften gegenüber Sauerstoffdurchtritt aus und sind daher als Verpackungsmaterial für Nahrungs- und Genussmittel geeignet.

**Beschreibung**

Die Erfindung betrifft eine zumindest einseitig haftvermittelnd modifizierte, transparente, biaxial orientierte Polyesterfolie, die Polyester und Poly(m-xylol-adipinamid) enthält. Die erfindungsgemäße Folie besitzt mindestens eine Oberfläche, die eine gute Haftung zu anderen Polymer- oder Metall-Schichten oder zu Druckfarben aufweist. Die Erfindung betrifft weiterhin ein Verfahren zur Herstellung der Folie und ihre Verwendung.

Transparente, biaxial orientierte Polyesterfolien, die sich durch verbesserte Barriereeigenschaften auszeichnen, sind nach dem Stand der Technik bekannt. In den meisten Fällen erhalten die Folien ihre verbesserten Barriereeigenschaften off-line nach der Herstellung durch einen weiteren Verarbeitungsschritt. Beispiele hierfür sind die Extrusionsbeschichtung, die Beschichtung oder Laminierung mit Barrierematerialien, die Beschichtung im Vakuum mit Metallen oder mit keramischen Substanzen oder die Plasmapolymerisation in Verbindung mit der Vakuumbeschichtung.

Eine Ausnahme hiervon bildet das in der WO 99/62694 näher beschriebene Verfahren, bei dem eine mehrschichtige, koextrudierte Polyesterfolie, die mindestens eine Schicht aus EVOH (Ethylen-Vinyl-Alkohol) enthält, simultan biaxial verstreckt wird. Diese Folie zeichnet sich durch gute mechanische Eigenschaften, insbesondere aber durch gute Barriereeigenschaften gegen den Durchtritt von Sauerstoff aus. Als bester Wert für die erzielbare Sauerstoffdurchlässigkeit OTR (engl. Oxygen Transmission Rate) werden in der Schrift 5 $cm^3/(m^2 \cdot bar \cdot d)$ angegeben. Nachteilig an dem Verfahren ist u. a., dass das bei der Herstellung anfallende Regenerat dem Herstellungsprozess nicht wieder zugeführt werden kann, ohne dass die Folie ihre guten optischen und physikalischen Eigenschaften verliert.

Ebenfalls eine Ausnahme bildet die Folie nach der EP-A-0 675 158, bei der es sich um eine gereckte Verbundfolie auf Polyesterbasis mit verbesserten Barriereeigenschaften gegenüber Gasen handelt. Die Folie ist zumindest auf einer der beiden Seiten mit einer 0,3 µm oder weniger dicken Schicht aus Polyvinylalkohol überzogen, der einen zahlenmäßigen mittleren Polymerisationsgrad von 350 und mchr hat, wobei die mittlere Rauigkeit $R_z$ der zu beschichtenden Seite der Basisfolie 0,30 µm oder weniger beträgt und wobei diese Seite durch eine bestimmte Verteilung der Erhebungen auf der Folienoberfläche gekennzeichnet ist. Diese Verbundfolie weist eine Sauerstoffdurchlässigkeit auf, die weniger als 3 $cm^3/(m^2 \cdot bar \cdot d)$ beträgt. Nachteilig an dieser Verbundfolie ist ihre geringe Beständigkeit z. B. gegenüber Feuchtigkeit. Bei Kontakt mit Wasser oder Wasserdampf geht die Haftung der Barrierebeschichtung aus Polyvinylalkohol zur Polyesterfolie verloren mit dem Effekt, dass die Barrierebeschichtung von der Polyesterfolie abwaschbar ist.

Eine weitere Ausnahme bildet die in der JP 2001-001399 beschriebene biaxial orientierte Folie, die aus einer Mischung von Polyethylenterephthalat und Poly(m-xylol-adipinamid) (MXD6) besteht. Der Anteil von Poly(m-xylol-adipinamid) (MXD6) in der Folie liegt zwischen 10 und 40 Gew.-% und der entsprechende Anteil von Polyethylenterephthalat zwischen 60 und 90 Gew.-%. Die Folie wird erfindungsgemäß simultan biaxial verstreckt. Für die Streckparameter werden in der Schrift folgende Daten angegeben: Die Streckverhältnisse in beiden Richtungen liegen zwischen 2,5 und 5,0. In den Bespielen wird die Folie aber lediglich um den Faktor 3,0 in Maschinenrichtung und um den Faktor 3,3 quer zur Maschinenrichtung verstreckt. Das Gesamtstreckverhältnis beträgt damit 9,9. Die Strecktemperaturen in beiden Richtungen liegen zwischen 80 und 140 °C. In den Beispielen wird die Folie in beiden Richtungen bei 90 °C gestreckt.

Nach der JP 2001-001399 weist eine simultan verstreckte Folie gegenüber einer Folie, die sequenziell verstreckt worden ist (z. B. zuerst in Maschinenrichtung (MD oder MDO) und dann in Querrichtung (TD oder TDO)), eine geringere Trübung auf und ist prozesssicherer, d. h. mit einer geringeren Anzahl von Abrissen bei der zweiten Streckung (z. B. in Querrichtung) herzustellen. Gemäß obiger Schrift tritt bei der sequenziellen (nicht erfindungsgemäßen) Verstreckung im ersten Streckschritt (z. B. MDO) eine derart große Kristallisation auf, dass die Folie bei der zweiten (nachfolgenden) Verstreckung trüb und gegenüber einer weiteren Verstreckung empfindlicher wird. Entsprechend den in der Schrift dargelegten (Vergleichs-) Beispielen 3 und 4 kann eine Polyesterfolie mit 10 bis 40 % MXD6 nicht nach dem sequenziell arbeitenden Verfahren hergestellt werden, da sie in der zweiten Streckung reißt.

Die gemäß der JP 2001-001399 nach dem Simultanverfahren hergestellten biaxial orientierten Folien zeichnen sich durch eine niedrige Trübung, insbesondere aber durch eine gute Barriere hinsichtlich der Permeation von Sauerstoff aus. Mit der Folie wird eine Sauerstoffdurchlässigkeit OTR erzielt, die kleiner als 30 $cm^3/(m^2 \cdot bar \cdot d)$ ist. Die Trübung der Folie ist erfindungsgemäß kleiner als 15 %. Die Folie weist aber auch eine Reihe von Nachteilen auf: Sie hat vergleichsweise geringe mechanische Festigkeiten. Insbesondere sind der Elastizitätsmodul (E-Modul) und die Reißfestigkeit verbesserungswürdig. Sie neigt zum Verblocken und ist damit nur bedingt wickelbar. Sie hat vergleichsweise raue Oberflächen. Die Folie hat ferner ein mattes Aussehen, was für viele Anwendungen unerwünscht ist. Sie ist damit auch vergleichsweise weniger gut zu bedrucken, zu metallisieren oder zu beschichten.

Aufgabe der vorliegenden Erfindung war es, eine biaxial orientierte Polyesterfolie zur Verfügung zu stellen, die sich durch sehr gute Barriereeigenschaften auszeichnet, insbesondere gegenüber dem Durchtritt von Sauerstoff. Die Folie sollte gegenüber Folien nach dem Stand der Technik zusätzlich folgende vorteilhafte Eigenschaften / Eigenschaftskombinationen aufweisen:

· Sie soll höhere mechanische Festigkeiten aufweisen, insbesondere einen höheren E-Modul besitzen.

· Sie soll einen hohen Glanz haben und damit gut bedruckbar, gut metallisierbar und gut beschichtbar sein.

· Sie soll gut wickelbar sein (nicht verblocken) und zu einer Kundenrolle ohne Wickeldefekte verarbeitbar sein.

· Sie soll sich wirtschaftlich herstellen lassen. Dies bedeutet beispielsweise, dass zur Herstellung der Folie in der Industrie übliche Streckverfahren eingesetzt werden, die bei hoher Geschwindigkeit von z. B. über 350 m/min (über 400 m/min) arbeiten können. Auf das teure simultan arbeitende Streckverfahren, das nach dem Stand der Technik bei deutlich geringerer Geschwindigkeit (< 350 m/min) und Breite (< 5 m) arbeitet und damit unwirtschaftlicher ist, sollte nicht zurückgegriffen werden müssen.

· Bei der Herstellung der Folie sollte gewährleistet sein, dass das anfallende Regenerat in einer Menge von bevorzugt 5 bis zu 60 Gew.-% wieder dem Herstellprozess (Extrusion und biaxiale Verstreckung) zugeführt werden kann, ohne dass dabei die physikalischen und optischen Eigenschaften der Folie, insbesondere aber die Barriereeigenschaften gegenüber Sauerstoff, nennenswert negativ beeinflusst werden.

· Sie sollte zumindest eine Seite aufweisen, die eine gute Haftung z. B. zu anderen Polymer- oder Metallschichten oder zu Druckfarben gewährleistet bzw. vermittelt.

Gelöst wird die Aufgabe durch eine bevorzugt nach dem sequenziellen Streckverfahren hergestellte, biaxial orientierte und transparente Polyesterfolie, die Poly(m-xylol-adipinamid) (MXD6) in einer Konzentration von bevorzugt 5 bis 45 Gew.-% enthält, einen Elastizitätsmodul (E-Modul) von mindestens 3500 N/mm$^2$ in beiden Orientierungsrichtungen aufweist (MD und TD) und zumindest auf einer Seite eine haftvermittelnde Schicht bzw. Oberfläche aufweist.

Die Folie enthält bevorzugt Füllstoffe in einer Konzentration von bevorzugt 0,02 bis 1 Gew.-%.

Die Folie enthält ferner einen thermoplastischen Polyester, bevorzugt zu mindestens 55 Gew.-%. Der Anteil an Poly(m-xylol-adipinamid) in der Folie beträgt bevorzugt 5 bis 45 Gew.-%, insbesondere 5 bis 40 Gew.-%.

Soweit nicht anders angegeben, beziehen sich alle Gew.-%-Angaben auf das Gesamtgewicht der erfindungsgemäßen Folie.

Poly(m-xylol-adipinamid) (MXD6), auch als Poly-m-Xylylen-adipinamid oder PA-MXD6 bezeichnet, ist ein Polykondensationsprodukt (Polyarylamid) aus m-Xylylendiamin und Adipinsäure und wird in verschiedenen Typen auf dem Markt angeboten, die grundsätzlich alle für den erfindungsgemäßen Zweck geeignet sind. Bevorzugt werden jedoch Typen mit einer Schmelzviskosität von kleiner als 6000 Poise (= 600 Pa • s, T = 280 °C, Schergeschwindigkeit $\gamma_{Punkt} \geq 100$ s$^{-1}$).

Die biaxial orientierte, transparente Polyesterfolie nach der vorliegenden Erfindung weist gegenüber Folien nach dem Stand der Technik verbesserte mechanische und verbesserte optische Eigenschaften auf, insbesondere auch einen erhöhten Glanz. Darüber hinaus zeichnet sich die Folie durch hervorragende Barriereeigenschaften, insbesondere gegenüber dem Durchtritt von Gasen wie z. B. Sauerstoff aus.

Die Folie besitzt eine Sauerstoffbarriere (OTR) von bevorzugt kleiner als 45 cm$^3$/(m$^2$ · d · bar), vorzugsweise kleiner als 40 cm$^3$/(m$^2$ · d · bar) und besonders bevorzugt kleiner als 30 cm$^3$/(m$^2$ · d · bar); bezogen auf eine Folie mit einer Dicke von 12 μm.

Weiterhin zeigt die Folie das gewünschte Verarbeitungs- und Wickelverhalten. Sie zeigt insbesondere keine Klebeneigung an Walzen oder anderen mechanischen Teilen, keine Blockprobleme und keine Längsrillen beim Wickeln. Mit der Folie kann damit eine Kundenrolle in sehr guter Wickelqualität ohne weiteres hergestellt werden.

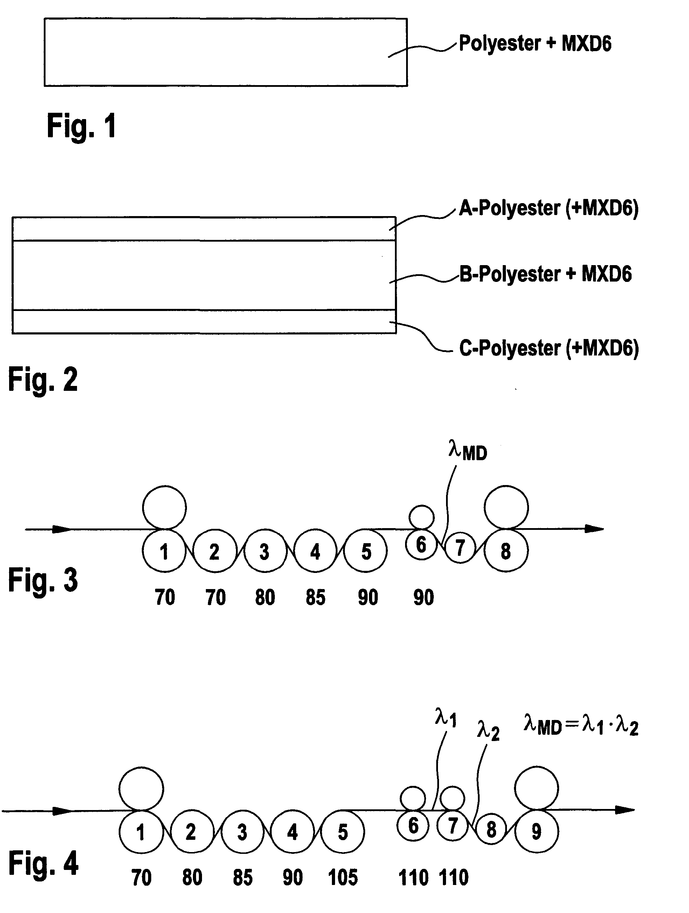

Die Folie nach der vorliegenden Erfindung besteht bevorzugt aus der erfindungsgemäßen Polymermischung. In diesem Fall ist die Folie einschichtig aufgebaut (vgl. Figur 1). In einer anderen erfindungsgemäßen Ausführungsform ist die Folie mehrschichtig, beispielsweise dreischichtig, aufgebaut (vgl. Figur 2). Sie besteht dann z. B. aus der erfindungsgemäßen Basisschicht (B), der auf der einen Seite der Basisschicht (B) aufgebrachten Deckschicht (A) sowie einer auf der anderen Seite der Basisschicht (B) aufgebrachten Deckschicht (C). Die Schichten A und C können gleich oder verschieden sein.

Die Folie bzw. die Basisschicht der Folie besteht bevorzugt zu mindestens 55 Gew.-% aus thermoplastischem Polyester (= Komponente I). Dafür geeignet sind z. B. Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure (= Poly-1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Bevorzugt sind Polyester, die zu mindestens 90 Mol-%, besonders bevorzugt mindestens 95 Mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen Diolen bzw. anderen Dicarbonsäuren. In vorteilhafter Weise können für die Komponente I der Folie bzw. der Basisschicht (B) auch Copolymere oder Mischungen oder Blends aus den genannten Homo- und/oder Copolymeren verwendet werden.

Besonders vorteilhaft ist es für den zuletzt genannten Fall, wenn in der Folie bzw. in der Basisschicht (B) als Komponente I ein Polyester-Copolymer auf Basis von Isophthalsäure und Terephthalsäure oder auf Basis von Terephthalsäure und Naphthalin-2,6-dicarbonsäure verwendet wird. In diesem Fall ist die Herstellbarkeit der Folie gut und die optischen Eigenschaften der Folie sowie die erzielten Barriereeigenschaften der Folie sind besonders gut. Ein besonderer Vorteil liegt darin, dass bei der Verwendung z. B. eines Polyester-Copolymeren auf Basis von Isophthalsäure und Terephthalsäure die Extrusionstemperatur abgesenkt werden kann, was für die Verarbeitung des MXD6 besonders vorteilhaft ist. Sind für die Extrusion von Polyethylenterephthalat beispielsweise 280 °C erforderlich, so kann im Falle der Verwendung eines Polyester-Copolymer auf Basis von Isophthalsäure und Terephthalsäure die Extrusionstemperatur auf unterhalb von 260 °C abgesenkt werden. Das MXD6 bleibt dann für die nachfolgende Streckung duktil, was sich z. B. in einer hohen Prozessstabilität und in sehr guten mechanischen Eigenschaften bemerkbar macht.

In diesem Fall enthält die Folie bzw. die Basisschicht (B) der Folie im wesentlichen als Komponente I ein Polyestercopolymeres, das überwiegend aus Isophthalsäure- und Terephthalsäure-Einheiten und aus Ethylenglykol-Einheiten zusammengesetzt ist, und als Komponente II das zuvor genannte erfindungsgemäße Poly(m-xylol-adipinamid) (MXD6). Darüber hinaus sind als Komponente I aber auch Mischungen aus Polyethylenterephthalat und Polyethylenisophthalat bevorzugt.

Die bevorzugten Copolyester (Komponente I), die die gewünschten Eigenschaften der Folie bereitstellen (insbesondere die Optik, gemeinsame Verstreckbarkeit), sind solche, die aus Terephthalat- und Isophthalat-Einheiten und aus Ethylenglykol-Einheiten aufgebaut sind. Der Anteil an Ethylenterephthalat in diesen Copolymeren beträgt bevorzugt 70 bis 98 Mol-% und der entsprechende Anteil an Ethylenisophthalat 30 bis 2 Mol-%. Hierunter sind wiederum solche Copolyester bevorzugt, bei denen der Anteil an Ethylenterephthalat 76 bis 98 Mol-% und der entsprechende Anteil an Ethylenisophthalat 24 bis 2 Mol-% beträgt, und ganz bevorzugt sind solche Copolyester, bei denen der Anteil an Ethylenterephthalat 80 bis 98 Mol-% und der entsprechende Anteil an Ethylenisophthalat 20 bis 2 Mol-% beträgt.

Geeignete andere aliphatische Diole, die Bestandteile der erfindungsgemäßen Polyester sein können, sind beispielsweise Diethylenglykol, Triethylenglykol, aliphatische Glykole der allgemeinen Formel $HO-(CH_2)_n-OH$, wobei n eine ganze Zahl von 2 bis 6 darstellt, (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen, cycloaliphatische, gegebenenfalls heteroatomhaltige Diole mit einem oder mehreren Ringen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, -O-, -S- oder $-SO_2-$ steht. Daneben sind auch Bisphenole der Formel $HO-C_6H_4-C_6H_4-OH$ gut geeignet.

Geeignete andere aromatische Dicarbonsäuren, die Bestandteile der erfindungsgemäßen Polyester sein können, sind bevorzugt Benzoldicarbonsäuren, Naphthalin-dicarbonsäuren (beispielsweise Naphthalin-1,4- oder -1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die $(C_3-C_{19})$-Alkandisäuren besonders geeignet, wobei der Alkanteil geradkettig oder verzweigt sein kann.

Die Herstellung der Polyester kann nach dem bekannten Umesterungsverfahren erfolgen. Dabei geht man von Dicarbonsäureestem und Diolen aus, die mit den üblichen Umesterungskatalysatoren wie Zink-, Calcium-, Lithium- und Mangan-Salzen umgesetzt werden. Die Zwischenprodukte werden dann in Gegenwart allgemein üblicher Polykondensationskatalysatoren wie Antimontrioxid oder Titan-Salzen polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus. Weiterhin sind die erfindungsgemäßen Polyester von verschiedenen Herstellern erhältlich.

Erfindungsgemäß enthält die Basisschicht (B) bzw. die Folie als eine weitere Komponente Poly(m-xylol-adipinamid) (MXD6) (= Komponente II) in einer Menge von insbesondere 5 bis 40 Gew.-% und besonders bevorzugt in einer Menge von 5 bis 35 Gew.-%.

Für die Verarbeitung der Polymere hat es sich als günstig erwiesen, wenn das Poly(m-xylol-adipinamid) (MXD6) so ausgewählt wird, dass sich die Viskositäten der jeweiligen Polymerschmelzen nicht zu sehr unterscheiden. Im anderen Fall ist unter Umständen mit zusätzlichen Erhebungen/Vorsprüngen, mit Fließstörungen oder mit Streifenbildung auf der fertigen Folie zu rechnen. Außerdem neigen die Polymere dann zur Entmischung. Entsprechend den hier durchgeführten Experimenten sollte die Schmelzviskosität des Poly(m-xylol-adipinamid) (MXD6) bevorzugt unterhalb von bestimmten Werten liegen. Sehr gute Resultate im Sinne der vorliegenden Erfindung erhält man, wenn die Schmelzviskostiät für das MXD6 kleiner als 6000 Poise (gemessen in einem Kapillarrheometer von 0,1 mm Durchmesser, einer Länge von 10 mm und einer Schergeschwindigkeit von $\gamma_{Punkt} \geq 100$ s$^{-1}$, Schmelztemperatur 280 °C), bevorzugt kleiner als 5000 Poise und besonders bevorzugt kleiner als 4000 Poise ist.

Entsprechendes gilt auch für die Viskosität des eingesetzten Polyesters. Sehr gute Resultate im Sinne der vorliegenden Erfindung erhält man, wenn die Schmelzviskostiät für den Polyester kleiner als 2400 Poise (gemessen in einem Kapillarrheometer von 0,1 mm Durchmesser, einer Länge von 10 mm und einer Schergeschwindigkeit von $\gamma_{Punkt} \geq 100$ s$^{-1}$, Schmelztemperatur 280 °C), bevorzugt kleiner als 2200 Poise und besonders bevorzugt kleiner als 2000 Poise ist.

**EP 1 609 813 A1**

Das Poly(m-xylol-adipinamid) (MXD6) wird zweckmäßigerweise entweder als reines Granulat oder als granuliertes Konzentrat (Masterbatch) in die Folie eingearbeitet. Im Falle der Verarbeitung über ein Masterbatch weist dieses eine Konzentration von bevorzugt 10 bis 60 Gew.-% an MXD6 auf. Das Polyestergranulat wird dazu mit dem Poly(m-xylol-adipinamid) (MXD6) bzw. dem Poly(m-xylol-adipinamid) (MXD6)-Masterbatch vorgemischt und anschließend dem Extruder zugeführt. Im Extruder werden die Komponenten weiter vermischt und auf Verarbeitungstemperatur erwärmt. Dabei ist es für das erfindungsgemäße Verfahren zweckmäßig, wenn die Extrusionstemperatur oberhalb der Schmelztemperatur $T_S$ des Poly(m-xylol-adipinamid) (MXD6) liegt, im allgemeinen mindestens 5 °C, vorzugsweise 5 bis 50 °C, insbesondere aber 5 bis 40 °C über der Schmelztemperatur des Poly(m-xylol-adipinamid) (MXD6). Als eine bevorzugte Extrusionseinheit für die Verarbeitung der Mischung bzw. auch für die Herstellung des Masterbatches aus den Komponenten I und II bietet sich der Zweischneckenextruder an. Zu erwähnen bleibt, dass auch mit dem Einschneckenextruder gute Ergebnisse erzielt werden und damit dieses Prinzip prinzipiell angewendet werden kann.

Die Folie nach der vorliegenden Erfindung ist zumindest einschichtig aufgebaut. Sie besteht dann aus der erfindungsgemäßen Mischung, bevorzugt hergestellt nach dem erfindungsgemäßen Verfahren. Darüber hinaus kann die Folie zusätzliche Schichten aufweisen, z. B. eine auf der Basisschicht (B) angeordnete Deckschicht (C) oder aber auch Zwischenschichten wie z. B. zwischen der Basisschicht (B) und der Deckschicht (C). Typische Folienaufbauten sind dann z. B. B (= Monofolie) oder BC oder BZC, wobei (Z) eine Zwischenschicht und (C) eine Deckschicht darstellt, oder auch ABC oder ABA, wobei die Deckschicht A und C gleich oder verschieden sein können.

Für die Deckschicht und für die Zwischenschichten können prinzipiell die gleichen Polymere verwendet werden wie für die Basisschicht B. In diesen weiteren Schichten können aber auch andere Materialien enthalten sein, wobei dann diese Schichten bevorzugt aus einem Gemisch von Polymeren, Copolymeren oder Homopolymeren bestehen, welches bevorzugt Ethylenisophthalat-Einheiten und/oder Ethylen-2,6-naphthalat-Einheiten und/oder Ethylenterephthalat-Einheiten enthält. Bis zu 10 Mol-% der Polymere können aus weiteren Comonomeren bestehen.

In vorteilhafter Weise können in diesen weiteren Schichten als weitere Komponenten auch (Polyester-) Copolymere oder (Polyester-) Mischungen oder Blends aus Homo- und/oder Copolymeren verwendet werden.

Besonders zweckmäßig ist, wenn in der Deckschicht (C) und/oder (A) ein Polyester-Copolymer auf Basis von Isophthalsäure und Terephthalsäure verwendet wird. In diesem Fall sind die optischen Eigenschaften der Folie besonders gut.

In diesem Fall enthält die Deckschicht (C) und/oder (A) der Folie im Wesentlichen ein Polyestercopolymeres, das überwiegend aus Isophthalsäure- und Terephthalsäure-Einheiten und aus Ethylenglykol-Einheiten zusammengesetzt ist. Die restlichen Monomereinheiten stammen aus anderen aliphatischen, cycloaliphatischen oder aromatischen Diolen bzw. anderen Dicarbonsäuren wie sie auch in der Basisschicht vorkommen können. Die bevorzugten Copolyester, die die gewünschten Eigenschaften der Folie bereitstellen (insbesondere die Optik), sind solche, die aus Terephthalat- und Isophthalat-Einheiten und aus Ethylenglykol-Einheiten aufgebaut sind. Der Anteil an Ethylenterephthalat beträgt bevorzugt 40 bis 97 Mol-% und der entsprechende Anteil an Ethylenisophthalat 60 bis 3 Mol-%. Bevorzugt sind Copolyester, bei denen der Anteil an Ethylenterephthalat 50 bis 90 Mol-% und der entsprechende Anteil an Ethylenisophthalat 50 bis 10 Mol-% beträgt, und ganz bevorzugt sind Copolyester, bei denen der Anteil an Ethylenterephthalat 60 bis 85 Mol--% und der entsprechende Anteil an Ethylenisophthalat 40 bis 15 Mol-% beträgt.

In einer weiteren Ausführungsform enthält auch die Deckschicht (C) und/oder (A) als eine weitere Komponente Poly(m-xylol-adipinamid) (MXD6) (= Komponente II) in einer Menge von bevorzugt 0 bis 80 Gew.-%, insbesondere in einer Menge von 2 bis 60 Gew.-% und besonders bevorzugt in einer Menge von 4 bis 40 Gew.-%, bezogen auf das Gewicht der jeweiligen Deckschicht.

Die Dicke der Deckschichten ist bevorzugt größer als 0,5 µm und liegt bevorzugt im Bereich von 1,0 bis 20 µm und besonders bevorzugt im Bereich von 1,5 bis 10 µm.

Die Basisschicht (B) sowie vorhandene Deck- und Zwischenschichten können zusätzlich übliche Additive wie z. B. Stabilisatoren und Antiblockmittel enthalten. Sie werden zweckmäßig dem Polymer bzw. der Polymermischung bereits vor dem Aufschmelzen zugesetzt. Als Stabilisatoren werden beispielsweise Phosphorverbindungen wie Phosphorsäure oder Phosphorsäureester eingesetzt.

Typische Antiblockmittel (in diesem Zusammenhang auch als Pigmente oder Füllstoffe bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder vernetzte Polystyrol- oder Acrylat-Partikel.

Als Additive können auch Mischungen von zwei oder mehreren verschiedenen Antiblockmitteln oder Mischungen von Antiblockmitteln gleicher Zusammensetzung, aber unterschiedlicher Partikelgröße gewählt werden. Die Partikel können den einzelnen Schichten in den üblichen Konzentrationen z. B. als glykolische Dispersion während der Polykondensation oder über Masterbatche bei der Extrusion zugegeben werden (oder auch als "Direct Additive Addition" [DAA] bei der Extrusion direkt in den Extruder).

Erfindungsgemäß enthält die Folie Füllstoffe in einer Konzentration von bevorzugt 0,02 bis 1 Gew.-%, bevorzugt Füllstoffe in einer Konzentration von 0,04 bis 0,8 Gew.-% und besonders bevorzugt Füllstoffe in einer Konzentration von 0,06 bis 0,6 Gew.-%, bezogen auf das Gewicht der Folie (eine detaillierte Beschreibung geeigneter Füllstoffe bzw. Antiblockmittel findet sich beispielsweise in der EP-A-0 602 964).

Beträgt die Konzentration weniger als 0,02 Gew.-%, so kann die Folie blocken und lässt sich dann z. B. nicht mehr wickeln. Beträgt die Konzentration dagegen mehr als 1,0 Gew.-%, so verliert die Folie u. U. ihre hohe Transparenz und wird trüb. Sie kann dann z. B. als Verpackungsfolie nicht mehr verwendet werden.

In einer bevorzugten Ausführungsform der Erfindung beträgt der Füllstoffanteil in den Deckschichten (A oder/ und C) weniger als 0,6 Gew.-%, bevorzugt weniger als 0,5 Gew.-% und besonders bevorzugt weniger als 0,4 Gew.-%, bezogen auf des Gewicht der jeweiligen Deckschicht.

Erfindungsgemäß ist mindestens eine Folienoberfläche so behandelt, dass der Kontaktwinkel zu Wasser bevorzugt < 64°, insbesondere < 62°, besonders bevorzugt < 60° ist.

Dies wird bevorzugt durch eine Corona- bzw. Flammbehandlung der Folienoberfläche (Fa. Softal, Hamburg) erreicht, die sich üblicherweise an die Thermofixierung der Folie anschließt. Ebenso kann die Behandlung an anderen Stellen im Folienherstellprozess, beispielsweise vor oder nach der Längsstreckung, erfolgen.

Alternativ oder zusätzlich zu der oben beschriebenen Oberflächenbehandlung kann zumindest eine der Oberflächen der Folie mit einer funktionalen Beschichtung beschichtet werden, so dass die Beschichtung auf der fertigen Folie eine Dicke von bevorzugt 5 bis 2000 nm, bevorzugt 20 bis 500 nm, insbesondere 30 bis 200 nm aufweist. Die Beschichtung wird bevorzugt In-line aufgebracht, d. h. während des Folienherstellprozesses, zweckmäßigerweise vor der Querstreckung. Besonders bevorzugt ist die Aufbringung mittels des "Reverse gravure-roll coating"-Verfahrens, bei dem sich die Beschichtung äußerst homogen in Schichtdicken bis ca. 200 nm auftragen lässt. Ebenfalls bevorzugt ist die Auftragung durch das Meyer-Rod-Verfahren, mit dem sich größere Beschichtungsstärken erzielen lassen. Die Beschichtungen werden bevorzugt als Lösungen, Suspensionen oder Dispersionen aufgetragen, besonders bevorzugt als wässrige Lösung, Suspension oder Dispersion.

Die genannten Beschichtungen verleihen der Folienoberfläche eine zusätzliche Funktion; beispielsweise wird die Folie dadurch siegelfähig, bedruckbar, metallisierbar, sterilisierbar, antistatisch, oder die Beschichtungen verbessern z. B. die Aromabarriere oder ermöglichen die Haftung zu Materialien, die ansonsten nicht auf der Folienoberfläche haften würden.

Beispiele für Stoffe/Zusammensetzungen, die zusätzliche Funktionalität verleihen sind: Acrylate wie sie beispielsweise beschrieben sind in der WO 94/13476, Ethylvinylalkohole, PVDC, Wasserglas ($Na_2SiO_4$), hydrophilische Polyester (5-Na-sulfoisophthalsäurehaltiger PET/IPA-Polyester wie sie beispielsweise beschrieben sind in der EP-A-0 144 878, US-A-4,252,885 oder EP-A-0 296 620), Polyvinylacetate wie sie beispielsweise beschrieben sind in der WO 94/13481, Polyurethane, Alkali- oder Erdalkalisalze von $C_{10}$-$C_{18}$-Fettsäuren, Butadiencopolymere mit Acrylnitril oder Methylmethacrylat, Methacrylsäure oder deren Ester.

Die genannten Stoffe/Zusammensetzungen werden z. B. als verdünnte Lösung, Emulsion oder Dispersion, vorzugsweise als wässrige Lösung, Emulsion oder Dispersion, auf eine oder beide Folienoberflächen aufgebracht, und anschließend wird das Lösungsmittel verflüchtigt. Werden die Beschichtungen In-line vor der Querstreckung aufgebracht, reicht gewöhnlich die Temperaturbehandlung in der Querstreckung aus, um das Lösungsmittel zu verflüchtigen und die Beschichtung zu trocknen.

In einer bevorzugten Ausführungsform der Erfindung wird eine Copolyesterbeschichtung zur Erzielung der besseren Haftung verwendet. Die bevorzugten Beschichtungscopolyester werden durch Polykondensation von a) Isophthalsäure, b) einer aliphatischen Dicarbonsäure mit der Formel

$$HOOC(CH_2)_nCOOH,$$

wobei n im Bereich von 1 bis 11 liegt, c) einem Sulfomonomeren enthaltend eine Alkalimetallsulfonatgruppe an dem aromatischen Teil einer aromatischen Dicarbonsäure und d) wenigstens einem aliphatischen oder cycloaliphatischen Alkylenglykol mit etwa 2 bis 11, bevorzugt 2 bis 8, besonders bevorzugt 2 bis 6 Kohlenstoffatomen, hergestellt. Die insgesamt anwesenden Säureäquivalente sollen auf molarer Basis im Wesentlichen den insgesamt anwesenden Glykoläquivalenten entsprechen.

Es hat sich gezeigt, dass die verhältnismäßigen Anteile der Komponenten a) bis d), die zur Herstellung der bevorzugten Copolyesterbeschichtungen eingesetzt werden, wichtig für das Erzielen einer beschichteten Folie mit zufriedenstellender Haftung sind. So sollte bevorzugt z.B. Isophthalsäure (Komponente a) zu mindestens etwa 65 Mol-% als Säurekomponente anwesend sein. Bevorzugt ist die Komponente a) reine Isophthalsäure, die in einer Menge von etwa 70 bis 95 Mol-% anwesend ist. Für die Komponente b) gilt, dass jede Säure mit der genannten Formel zufriedenstellende Ergebnisse bringt, wobei Adipinsäure, Azelainsäure, Sebacinsäure, Malonsäure, Bernsteinsäure, Glutarsäure oder Mischungen dieser Säuren bevorzugt werden. Die angestrebte Menge innerhalb des angegebenen Bereiches beträgt bevorzugt 1 bis 20 Mol-%, bezogen auf die Säurekomponenten des Copolyesters, wenn die Komponente b) in der Zusammensetzung enthalten ist. Das die Komponente c) der bevorzugten Copolyesterbeschichtung bildende Monomere sollte bevorzugt in einer Menge von wenigstens 5 Mol-% in diesem System enthalten sein, damit die Beschichtung mit Wasser dispergierbar wird. Besonders bevorzugt liegt die Menge an Monomerem der Komponente c) bei etwa 6,5 bis 12 Mol-%. Die Glykolkomponente d) ist in ungefähr stöchiometrischer Menge anwesend.

In einer weiteren bevorzugten Ausführungsform der Erfindung wird eine Acrylatbeschichtung zur Erzielung der besseren Haftung verwendet. Die bevorzugt verwendeten Acrylcopolymere bestehen im wesentlichen aus bevorzugt mindestens 50 Gew.-% eines oder mehrerer polymerisierter acrylischer und/oder methacrylischer Monomerer und ca. 1 bis 15 Gew.-% eines copolymerisierbaren Comonomeren, das in copolymerisiertem Zustand unter Einwirkung von erhöhter Temperatur, gegebenenfalls ohne Zusatz eines gesonderten harzförmigen Venetzungsmittels, zur Ausbildung von intermolekularen Vernetzungen befähigt ist.

Die acrylische Komponente der Haftvermittlercopolymere ist vorzugsweise in einer Menge von 50 bis 99 Gew.-% anwesend und besteht bevorzugt aus einem Ester der Methacrylsäure, insbesondere einem Alkylester, dessen Alkylgruppe bis zu zehn C- Atome enthält, wie z. B. die Methyl-, Ethyl-, n-Propyl-, Isopropyl-, n-Butyl-, Isobutyl-, tertiär-Butyl-, Hexyl-, 2-Ethylhexyl-, Heptyl- und n-Octylgruppe. Acrylcopolymere, die von einem niederen Alkylacrylat (C1 bis C4) abgeleitet sind, insbesondere Ethylacrylat, ergeben zusammen mit einem niederen Alkylmethacrylat eine besonders gute Haftung zwischen der Polyesterrolle und darauf aufgebrachten reprographischen Beschichtungen und Mattbeschichtungen. Ganz besonders bevorzugt werden Haftvermittlercopolymere aus einem Alkylacrylat, z. B. Ethylacrylat oder Butylacrylat, zusammen mit einem Alkylmethacrylat, z. B. Methylmethacrylat, insbesondere zu gleichen molaren Anteilen und in einer Gesamtmenge von bevorzugt 70 bis 95Gew.-%, eingesetzt. Das Acrylatcomonomere solcher Acryl-/Methacryl-Kombinationen ist vorzugsweise in einem Anteil von 15 bis 65 Mol-% anwesend und das Methacrylat- Comonomere vorzugsweise in einem Anteil, der im allgemeinen um 5 bis 20 Mol-% größer ist als der Anteil des Acrylatcomonomeren. Das Methacrylat ist vorzugsweise in einem Anteil von 35 bis 85 Mol-% in der Kombination enthalten.

Zur Erhöhung der Lösungsmittelbeständigkeit können zur Ausbildung von Vernetzungen geeignete Comonomere eingesetzt werden wie z. B. N- Methylolacrylamid, N-Methylolmethacrylamid und die entsprechenden Ether; Epoxidmaterialien wie z. B. Glycidylacrylat, Glycidylmethacrylat und Allylglycidylether; Carboxylgruppen enthaltende Monomere wie z.B. Crotonsäure, Itaconsäure oder Acrylsäure; Anhydride wie z. B. Maleinsäureanhydrid oder Itaconsäureanhydrid; Hydroxylgruppen enthaltende Monomere wie z. B. Allylalkohol und Hydroxyethyl- oder Hydroxypropylacrylat oder -methacrylat; Amide wie z. B. Acrylamid, Methacrylamid oder Maleinsäureamid und Isocyanate wie z. B. Vinylisocyanat oder Allylisocyanat. Von den oben genannten vernetzenden Comonomeren werden N-Methylolacrylamid und N- Methylolmethacrylamid bevorzugt, und zwar in erster Linie deswegen, weil Copolymerenketten, die eines dieser Monomere enthalten, unter der Einwirkung von erhöhten Temperaturen zur Kondensation miteinander und somit zur Ausbildung der gewünschten intermolekularen Vernetzungen befähigt sind. Die gegebenenfalls gcwünschtc Lösungsmittelbeständigkeit der bevorzugten Acrylatbeschichtung kann aber auch durch die Anwesenheit eines fremden Vernetzungsmittels wie z. B. eines Melamin- oder Harnstoff-Formaldehyd-Kondensationsproduktes erzielt werden. Wird keine Lösungsmittelbeständigkeit benötigt, so kann auf Vernetzungsmittel verzichtet werden.

Die bevorzugte Acrylat-Beschichtung kann ein- oder beidseitig auf die Folie aufgebracht werden. Es ist aber auch möglich, nur eine Seite der Folie mit der erfindungsgemäßen Beschichtung zu versehen und auf die Gegenseite eine andere Beschichtung aufzubringen. Die Beschichtungsrezeptur kann bekannte Zusätze enthalten wie z. B. Antistatika, Netzmittel, Tenside, pH-Regulatoren, Antioxidantien, Farbstoffe, Pigmente, Anti-Blockmittel wie z. B. kolloidales SiO2 usw. Normalerweise ist es angebracht, ein Tensid einzuarbeiten, um die Fähigkeit der wässrigen Beschichtung zur Benetzung der Trägerfolie aus Polyester zu erhöhen.

In einer weiteren bevorzugten Ausführungsform der Erfindung wird eine wasserlösliche oder hydrophile Beschichtung zur Erzielung einer besseren Haftung mit hydrophilen Schichten oder Druckfarben verwendet. Die bevorzugte hydrophile Beschichtung kann insbesondere auf drei Weisen erzielt werden; durch:

1. eine Mischung aus einem aromatischen Copolyester (I-1) mit einer in Wasser dispergierbaren funktionellen Gruppe und einem Polyvinylalkohol (II-1) oder
2. eine Mischung aus einem aromatischen Copolyester (I-2) mit einer in Wasser dispergierbaren funktionellen Gruppe und einem Polyglycerolpolyglycidylether (II-2) oder
3. eine Mischung aus einem wässrigen Polyurethan (I-3) und einem Polyvinylalkohol (II-3).

Die aromatischen Copolyester (I-1 und I-2) werden aus aromatischen Dicarbonsäuren wie zum Beispiel Terephthalsäure, 2,6-Naphthalindicarbonsäure oder Isophthalsäure, gegebenenfalls verzweigten oder kondensierten aliphatischen Diolen wie z. B. Ethylenglykol, Diethylenglykol, 2-Methylpropanol oder 2,2-Dimethylpropanol sowie einer esterbildenden Verbindung, die eine in Wasser dispergierbare funktionelle Gruppe trägt, hergestellt. Beispiele für die funktionellen Gruppen sind: Hydroxyl-, Carboxyl-, Sulfonsäure- oder Phosphorsäure-Gruppen bzw. deren Salze. Bevorzugt sind Sulfonsäure- und Carbonsäure-Salze. Als Polyvinylalkohol-Komponente (II-1 und II-3) kann jeder Polyvinylalkohol verwendet werden, der wasserlöslich und mit normalen Polymerisationstechniken herstellbar ist. Generell werden solche Polyvinylalkohole durch die Verseifung von Polyvinylacetaten hergestellt. Der Verseifungsgrad sollte bevorzugt mindestens 70 %, besser jedoch 80 bis 99,9 % betragen. Als Polyglycerolpolyglycidylether (II-2) werden bevorzugt Reaktionsprodukte von Glycerin und Epichlorhydrin mit Molekulargewichten zwischen ca. 250 und 1200 verwendet. Das wässrige Polyurethan (I-3) wird aus einem Polyol wie zum Beispiel Polyester mit Glykol-Endgruppen, Polyoxyethylenglykol, Polyoxypropylenglykol, Polyoxytetramethylenglykol oder acrylische Polylole, und einem Diisocyanat wie zum Beispiel Xyloldiisocyanat, Hexamethylendiisocyanat, 4,4'-Dicycloheylmethandiisocyanat, Toluidindiisocyanat, Phenylendiisocyanat, 4,4'- Diphenylmethandiisocyanat und 1,5-Naphthalindiisocyanat hergestellt.

Die bevorzugten Copolyester-, Acrylat- und hydrophilen Beschichtungen können weiterhin andere bekannte Zusätze enthalten wie z. B. Antistatika, Netzmittel, Tenside, pH-Regulatoren, Antioxidantien, Farbstoffe, Pigmente, Anti-Blockmittel wie z. B. kolloidales $SiO_2$ usw. (s. z. B. EP-A-0 144 948 = US 4,571,363, EP-A-0 144 878 = US 4,493,872).

Die erfindungsgemäße Folie ist z. B. hervorragend geeignet für die Verpackung von Lebensmitteln (z. B. Käse, Fleisch etc). Die Folie hat eine ausgezeichnete Resistenz zu Lösungsmitteln als auch zu Wasser. Es wurde z. B. gefunden, dass bei einer zweistündigen Extraktion der erfindungsgemäßen Folie in 121 °C Wasserdampfatmosphäre keine messbaren Mengen extrahiert wurden.

Die Gesamtdicke der erfindungsgemäßen Polyesterfolie kann innerhalb weiter Grenzen variieren und richtet sich nach dem beabsichtigten Verwendungszweck. Sie beträgt in der Regel 6 bis 300 µm, vorzugsweise 8 bis 200 µm, besonders bevorzugt 10 bis 100 µm, wobei im Falle aufgebrachter Deckschichten die Basisschicht (B) einen Anteil von vorzugsweise 40 bis 99 % an der Gesamtdicke hat.

Gegenstand der vorliegenden Erfindung ist auch ein Verfahren zur Herstellung der Folie. Zur Herstellung der Folie werden zweckmäßigerweise die jeweiligen Komponenten (Komponente I = Polyesterhomo- oder Polyestercopolymcrcs oder Mischungen hiervon, Komponente II = Poly(m-xylol-adipinamid) (MXD6)-Granulat) direkt dem Extruder zugeführt. Die Materialien lassen sich bei etwa 250 bis 300 °C extrudieren. Aus verfahrenstechnischer Sicht (Durchmischung der verschiedenen Polymere) hat es sich dabei als besonders günstig erwiesen, wenn die Extrusion der Mischung auf einem Zweischneckenextruder mit Entgasungsmöglichkeit durchgeführt wird (wobei in einer weniger bevorzugten Variante auch ein Einschneckenextruder erfolgreich verwendet werden kann).

Die Polymere für eventuell vorhandene Deckschichten (C und/oder A) werden zweckmäßig über weitere Extruder dem (Koextrusions-) System zugeführt; auch hier ist prinzipiell der Zweischneckenextruder dem Einschneckenextruder vorzuziehen. Die Schmelzen werden in einer Mehrschichtdüse zu flachen Schmelzefilmen ausgeformt und übereinander geschichtet. Anschließend wird der Mehrschichtfilm mit Hilfe einer Kühlwalze und gegebenenfalls weiterer Walzen abgezogen und verfestigt.

Die biaxiale Streckung wird erfindungsgemäß sequenziell durchgeführt. Dabei wird vorzugsweise erst in Längsrichtung (d. h. in Maschinenrichtung MD) und anschließend in Querrichtung (d. h. senkrecht zur Maschinenrichtung TD) gestreckt. Das Strecken in Längsrichtung lässt sich z. B. mit Hilfe von zwei entsprechend dem angestrebten Streckverhältnis verschieden schnell rotierender Walzen durchführen. Zum Querstrecken benutzt man allgemein einen entsprechenden Kluppenrahmen.

Die Temperatur, bei der die biaxiale Streckung durchgeführt wird, kann in einem relativ großen Bereich variieren und richtet sich nach den gewünschten Eigenschaften der Folie.

Erfindungsgemäß wird Längsstreckung (MDO) in einem Temperaturbereich von bevorzugt 80 (Aufheiztemperaturen 80 bis 130 °C, abhängig vom Streckverhältnis und dem verwendeten Streckverfahren) bis 130 °C (Strecktemperaturen 80 bis 130 °C, abhängig vom Streckverhältnis und dem verwendeten Streckverfahren) und die Querstreckung in einem Temperaturbereich von bevorzugt 90 (Beginn der Streckung) bis 140 °C (Ende der Streckung) durchgeführt.

Das Längsstreckverhältnis ist erfindungsgemäß größer als 3,0 und liegt bevorzugt im Bereich von 3,1:1 bis 5,0:1, bevorzugt im Bereich von 3,2:1 bis 4,9:1 und besonders bevorzugt im Bereich von 3,3:1 bis 4,8:1. Das Querstreckverhältnis ist erfindungsgemäß größer als 3,0 und liegt bevorzugt im Bereich von 3,2:1 bis 5,0:1, bevorzugt im Bereich von 3,3:1 bis 4,8:1 und besonders bevorzugt im Bereich von 3,4:1 1 bis 4,6:1.

Die Längsorientierung der Folie kann standardmäßig z. B. mit Hilfe von zwei entsprechend dem angestrebten Streckverhältnis verschieden schnell rotierender Walzen durchgeführt werden. In diesem Fall spricht man von einer Einspaltstreckung. Bei dieser Streckung wird der Film auf mehreren, hintereinander geschalteten Vorheizwalzen auf die Strecktemperatur aufgeheizt und mittels zwei verschieden schnell laufender Walzen um das gewünschte Streckverhältnis $\lambda_{MD}$ gestreckt (vgl. Figur 3). Die Temperatur der Folie bei der Verstreckung liegt bevorzugt im Bereich von 80 bis 100 °C und ist abhängig von dem Material (Mischungsverhältnis von z. B: PET und MXD6), das gestreckt wird, und dem Streckverhältnis $\lambda_{MD}$. Die Temperatur der Folie kann z. B. mittels IR gemessen werden. Entsprechend beträgt die Aufheiztemperatur ebenfalls bevorzugt 80 bis 100 °C und richtet sich im Wesentlichen nach der eingestellten Strecktemperatur. In Figur 3 ist die Situation beispielsweise für eine Anordnung von 5 Aufheizwalzen (1-5) und zwei Streckwalzen (6-7) dargestellt. Bei einer Strecktemperatur von 90 °C betragen die Temperaturen der Aufheizwalzen z. B. 70, 70, 80, 85 und 90 °C.

Bevorzugt wird die Längsorientierung der Folie in einem mehrstufigen, besonders bevorzugt in einem zweistufigen Prozess z. B. mit Hilfe mehrerer, entsprechend dem angestrebten Streckverhältnis verschieden schnell laufender Walzen durchgeführt. Im Fall der Zweistufenstreckung wird bevorzugt die Folie nach dem in der EP-A-0 049 108 veröffentlichten Verfahren orientiert (vgl. Figur 4, entspricht der Figur 1 aus der EP-A-0 049 108). Hierbei wird die Folie auf mehreren, hintereinander geschalteten Vorheizwalzen auf die Strecktemperatur aufgeheizt und mittels mehrerer (beim zweistufigen Streckprozess nach Figur 1 der EP-A-0 049 108 erfolgt die Streckung mit Hilfe von 3 Walzen) verschieden schnell laufender Walzen um das gewünschte Streckverhältnis $\lambda_{MD}$ gestreckt (vgl. Figur 4). Das Längsstreckverhältnis $\lambda_{MD}$ ($\lambda_{MD}$ entspricht dem Gesamtstreckverhältnis $\lambda_1 \cdot \lambda_2$ der EP-A-0 049 108) ist erfindungsgemäß größer als 3,0 und liegt bevorzugt im Bereich von 3,1:1 bis 5,0:1, bevorzugt im Bereich von 3,2:1 bis 4,9: 1 und besonders bevorzugt im Bereich von 3,3:1 bis 4,8:1. Die Temperatur der Folie bei der Verstreckung liegt bevorzugt im Bereich von 80 bis 130 °C und ist abhängig von dem Material (Mischungsverhältnis von z. B. PET und MXD6), das gestreckt wird, und dem Streckverhältnis $\lambda_{MD}$. Entsprechend beträgt die Aufheiztemperatur ebenfalls 80 bis 130 °C und richtet sich im Wesentlichen nach der eingestellten Strecktemperatur. In Figur 4 ist die Situation für eine Anordnung von 5 Aufheizwalzen (1-5) und drei Streckwalzen (6-8) dargestellt. Bei einer Strecktemperatur von 110 °C betragen die Temperaturen der Aufheizwalzen z. B. 70, 80, 85, 90, 105, 110 und 110 °C.

Bevorzugt vor der Querstreckung kann erfindungsgemäß zumindest eine Oberfläche der Folie nach den bekannten Verfahren In-Line beschichtet werden. Die In-Line-Beschichtung kann beispielsweise zu einer verbesserten Haftung zwischen einer Metallschicht oder einer Druckfarbe und der Folie, zu einer Verbesserung des antistatischen Verhaltens, des Verarbeitungsverhaltens oder auch zur weiteren Verbesserung von Barriereeigenschaften der Folie führen.

Bei der nachfolgenden Thermofixierung wird die Folie über eine Zeitdauer von etwa 0,1 bis 10 s bei einer Temperatur von ca. 150 bis 250 °C gehalten. Anschließend wird die Folie in üblicher Weise aufgewickelt.

Der Glanz der beiden Folienoberflächen ist bevorzugt größer als 80 bei einem Einstrahlwinkel von 20°. In einer bevorzugten Ausführungsform beträgt der Glanz der Folienoberflächen mehr als 100 und in einer besonders bevorzugten Ausführungsform mehr als 120.

Die Trübung der Folie ist bevorzugt kleiner als 20 %. In einer bevorzugten Ausführungsform beträgt die Trübung der Folie weniger als 15 % und in einer besonders bevorzugten Ausführungsform weniger als 10 %. Durch die geringe Trübung eignet sich die Folie insbesondere für die Verpackungsanwendung.

Ein weiterer Vorteil der Erfindung besteht darin, dass die Herstellungskosten der erfindungsgemäßen Folie nicht wesentlich über denen einer Folie aus Standardpolyesterrohstoffen liegen. Daneben ist bei der Herstellung der Folie gewährleistet, dass Verschnittmaterial, das bei der Folienherstellung im Betrieb immanent anfällt, als Regenerat in einer Menge von bevorzugt 5 bis 60 Gew.-%, insbesondere 10 bis 50 Gew.-%, jeweils bezogen auf das Gesamtgewicht der Folie, wieder für die Folienherstellung verwendet werden kann, ohne dass dabei die physikalischen Eigenschaften der Folie nennenswert negativ beeinflusst werden.

Die erfindungsgemäße Folie eignet sich insbesondere zum Verpacken von Nahrungs- und Genussmitteln. Daneben eignet sie sich hervorragend zum Metallisieren oder Vakuumbeschichten mit keramischen Substanzen. Sie zeichnet sich durch hervorragende Barriereeigenschaften gegenüber Gasen wie z. B. Sauerstoff und $CO_2$ aus.

Die nachstehende Tabelle (Tabelle 1) fasst die wichtigsten erfindungsgemäßen und bevorzugten Folieneigenschaften zusammen.

**Tabelle 1**

| Folie bzw. Basisschicht | Bevorzugter Bereich | Insbesondere bevorzugter Bereich | Ganz besonders bevorzugter Bereich | Einheit | Messmethode |
|---|---|---|---|---|---|
| Komponente I (= thermoplastischer Polyester) | 55 bis 95 | 60 bis 95 | 65 bis 95 | Gew.-% | |
| Komponente II (= Poly(mxyloladipin-amid) (MXD6) | 5 bis 45 | 5 bis 40 | 5 bis 35 | Gew.-% | |
| Schmelzviskosität des verwendeten MXD6 | < 6000 | < 5000 | < 4000 | Poise | im Kapillar-rheometer, 280 °C |
| Biaxiale Orientierung | sequenziell | + erst MD, dann TD | + MD, zweistufig | | |
| Längsstreckung, Streckverhältnis $\lambda_{MD}$ | 3,1:1 bis 5,0:1 | 3,2:1 bis 4,9:1 | 3,3: 1 bis 4,8:1 | | |
| Querstreckung, Streckverhältnis $\lambda_{TD}$ | 3,2:1 bis 5,0:1 | 3,3:1 bis 4,8:1 | 3,4:1 bis 4,6:1 | | |
| Füllstoffkonzentration | 0,02 bis 1 | 0,04 bis 0,8 | 0,06 bis 0,6 | Gew.-% | |
| **Folieneigenschaften** | | | | | |
| Permeationskoeffizient für Sauerstoff | < 45 | < 40 | < 30 | $cm^3[12\ \mu m]/(m^2 \cdot bar \cdot d)$ | DIN 53 380, Teil 3 |
| OTR einer **12** μm dicken Folie | < 45 | < 40 | < 30 | $cm^3/(m^2 \cdot bar \cdot d)$ | DIN 53 380, Teil 3 |
| Dicke der Folie | 6 bis 300 | 8 bis 200 | 10 bis 100 | μm | |
| Glanz der Folie (Messwinkel = 20°) | > 80 | > 100 | > 120 | - | DIN 67 530 |
| Trübung der Folie | < 20 | < 15 | < 10 | % | ASTM-D 1003-52 |
| E-Modul der Folie in MD-Richtung / in TD-Richtung | > 3500 / > 3500 | > 4000 / > 4000 | > 4500 / > 4500 | $N/mm^2$ | DIN 53 457 |
| Reißfestigkeit der Folie in MD-Richtung / in TD-Richtung | > 160 / > 200 | > 170 / > 210 | > 180 / > 220 | $N/mm^2$ | DIN 53 455 |
| Kontaktwinkel zu Wasser auf der beschichteten/behandelten Folienseite | < 64 | < 62 | < 60 | Grad | s. Beschreibung |

Messmethoden

Zur Charakterisierung der Rohstoffe und der Folien wurden die folgenden Methoden benutzt:

DIN = Deutsches Institut für Normung,
ASTM = American Society for Testing and Materials

**(1) Sauerstoffdurchlässigkeit (OTR = Oxygen Transmission Rate)**

Die Messung der Sauerstoffbarriere erfolgte mit einem OXTRAN® 100 von Mocon Modern Controls (USA) entsprechend DIN 53 380, Teil 3 (23 °C, 50 % relative Luftfeuchtigkeit auf beiden Seiten der Folie). Die Messung der OTR erfolgte dabei jeweils an 12 µm dicker Folie.

**(2) Trübung**

Die Trübung der Folie wurde nach ASTM-D 1003-52 bestimmt.

**(3) SV-Wert (standard viscosity)**

Die Standardviskosität SV (DCE) wird, angelehnt an DIN 53726, in Dichloressigsäure gemessen. Die intrinsische Viskosität (IV) berechnet sich wie folgt aus der Standardviskosität

$$IV\ (DCE) = 6{,}907 \cdot 10^{-4}\ SV\ (DCE) + 0{,}063096$$

**(4) Glanz**

Der Glanz wurde nach DIN 67530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden. Die in den Beispielen angegebenen Messwerte für den Glanz wurden bei einem Einstrahlwinkel von 20° gemessen.

**(5) Rauigkeit**

Die Rauigkeit $R_a$ der Folie wurde nach DIN 4768 bei einem Cut-off von 0,25 mm bestimmt. Es wurde dabei nicht auf einer Glasplatte, sondern im Ring gemessen. Bei der Ringmethode wird die Folie in einen Ring eingespannt, so dass keine der beiden Oberflächen eine dritte Oberfläche (z. B. Glas) berührt.

**(6) E-Modul**

Der E-Modul wird gemäß DIN 53 457 bzw. ASTM 882 bestimmt

**(7) Reißfestigkeit, Reißdehnung**

Die Reißfestigkeit und die Reißdehnung werden nach DIN 53 455 bestimmt.

**(8) Kontaktwinkel mit Wasser**

Die Polarität der Oberfläche wurde durch eine Randwinkelmessung von destilliertem Wasser auf der beschichteten bzw. behandelten Folienoberfläche bestimmt. Die Messung fand bei 23 °C und 50 % r. F. statt. Mittels einer Dosierspritze wird ein 1 bis 2 mm breiter Tropfen destilliertes Wasser auf die Folienoberfläche aufgebracht. Da die Messung bedingt durch Wärmezufuhr der Beleuchtung (Verdunstung), Aufladung oder Spreizverhalten zeitabhängig ist, verbleibt die Nadel in dem Tropfen, so dass der Tropfen während der Messung vorsichtig vergrößert und dann sofort mittels eines Goniometerokkulars der Kontaktwinkel abgelesen wird (Messung des Fortschreitwinkels). Aus 5 Messungen wird der Mittelwert gebildet. (vgl. z. B. ASTM-D 5946-01).

**Beispiele**

Die folgenden Beispiele illustrieren die Erfindung. Die verwendeten Produkte (Marken und Herstellerfirma) sind jeweils nur einmal angegeben und beziehen sich dann auch auf die nachfolgenden Beispiele.

**Beispiel 1**

Chips aus Polyethylenterephthalat (hergestellt über das Umesterungsverfahren mit Mn als Umesterungskatalysator, Mn-Konzentration im Polymer: 100 ppm; bei einer Temperatur von 150 °C auf eine Restfeuchte von unterhalb 100 ppm getrocknet) und Poly(m-xylol-adipinamid) (MXD6), ebenfalls bei einer Temperatur von 150 °C getrocknet. wurden in einem Mischungsverhältnis von 90:10 dem Extruder (Zweischneckenextruder mit zwei Entgasungsmöglichkeiten) zugeführt und durch Extrusion eine einschichtige Folie hergestellt. Die Folie wurde in Längsrichtung (zweistufig) und in Querrichtung verstreckt, und es wurde eine transparente Folie mit einer Gesamtdicke von 12 $\mu$m erhalten. Vor der Aufrollung wurde eine Seite der Folie coronabehandelt, wobei die Behandlungsstärke 2 kW/m$^2$ betrug.

Folienaufbau

| 10 Gew.-% | Poly(m-xylol-adipinamid) (MXD6) der Fa. Mitsubishi Gas Chemical Co., Produktname Nylon® MXD6 6007, mit einer Schmelzviskosität von 5000 Poise |
| 80 Gew.-% | Polyethylenterephthalat 4023 der Fa. KoSa, Deutschland, mit einem SV-Wert von 800 |
| 10 Gew.-% | Polyesterrohstoff von Fa. KoSa mit einem SV-Wert von 800, bestehend aus 99 Gew.-% Polyethylenterephthalat 4023 der Fa. KoSa und 1,0 Gew.-% Kieselsäurepartikel (Sylysia® 320 von der Fa. Fuji/ Japan) mit einem $d_{50}$-Wert von 2,5 $\mu$m |

Die Herstellungsbedingungen in den einzelnen Verfahrensschritten sind wie folgt:

| Extrusion | max. Temperatur | | 280 °C |
|---|---|---|---|
| | Temperatur der Abzugswalze | | 25 °C |
| Längsstreckung | Längsstreckverhältnis | $\lambda_{MDO}$ | 4,0 |
| | | $\lambda_1$ | 1,75 |
| | Strecktemperatur beim | 1. Strecken | 115 °C |
| | | $\lambda_2$ | 2,3 |
| | Strecktemperatur beim | 2. Strecken | 113 °C |
| | Aufheiztemperatur | 1. Walze | 70 °C |
| | | letzte Walze | 115 °C |
| Querstreckung | Strecktemperatur | Anfang | 110 °C |
| | | Ende | 134 °C |
| | Querstreckverhältnis | | 3,8 |
| Fixierung | Temperatur | | 230 °C |
| | Dauer | | 3 s |

Die Oberflächen der Folie hatten den geforderten hohen Glanz, die Folie die geforderte niedrige Trübung, die geforderte niedrige OTR und die geforderten hohen mechanischen Festigkeiten. Weiterhin konnte die Folie sehr gut, d. h. abrissfrei, hergestellt werden und zeigte außerdem das gewünschte Verarbeitungsverhalten (u. a. gute Wickelqualität wie z. B. keine Blockpickel, keine Längsrillen, keine hohen Kanten). Die Folie hatte die gewünschte verbesserte Haftung, der Kontaktwinkel zu Wasser betrug 63,7°.

**Beispiel 2**

Chips aus einem Copolyester aufgebaut aus Terephthalat- und Isophthalat-Einheiten und aus Ethylenglykol-Einheiten (der Anteil an Ethylenterephthalat beträgt 90 Mol-% und der Anteil an Ethylenisophthalat 10 Mol-%, hergestellt über das Umesterungsverfahren mit Mn als Umesterungskatalysator, Mn-Konzentration im Polymer: 100 ppm; bei einer Temperatur von 100 °C auf eine Restfeuchte von unterhalb 100 ppm getrocknet) und Poly(m-xylol-adipinamid) MXD6, ebenfalls bei einer Temperatur von 100 °C getrocknet, wurden in einem Mischungsverhältnis von 90 : 10 dem Extruder (Zweischneckenextruder) zugeführt und durch Extrusion eine einschichtige Folie hergestellt. Die Folie wurde in Längsrichtung (zweistufig) und in Querrichtung verstreckt, und es wurde eine transparente Folie mit einer Gesamtdicke von 12 µm erhalten.

Die Folie wurde ähnlich wie in Beispiel 1 hergestellt, jedoch ohne Coronabehandlung nach dem biaxialen Strecken. Ein Latex mit 4,5 Gew.-% Feststoffgehalt, bestehend aus einem Copolymeren aus 60 Gew.-% Methylmethacrylat, 35 Gew.-% Ethylacrylat und 5 Gew.-% N-Methylolacrylamid und einem Tensid, wurde nach dem folgenden Verfahren als Haftvermittlerbeschichtung einseitig auf die Polyesterfolie aufgebracht: Die längsgestreckte Folie wurde coronabehandelt (8 kW/m$^2$) und danach durch Reversgravurbeschichtung auf einer Seite mit dem oben beschriebenen Latex beschichtet.

Die biaxial gestreckte Folie wurde bei 225 °C thermofixiert. Das Trockengewicht der Beschichtung betrug ca. 0,35 g/m$^2$ bei einer Beschichtungsdicke von etwa 0,025 µm.

Folienaufbau

| 10 Gew.-% | Poly(m-xylol-adipinamid) (MXD6) der Fa. Mitsubishi Gas Chemical Co., Produktname Nylon MXD6 6007, mit einer Schmelzviskosität von 5000 Poise |
| 80 Gew.-% | Polyestercopolymeres (Ethylenterephthalat 90 Mol-%, Ethylenisophthalat 10 Mol-%, Fa. KoSa, Deutschland) mit einem SV-Wert von 800 |
| 10 Gew.-% | Polyesterrohstoff von Fa. KoSa mit einem SV-Wert von 800, bestehend aus 99 Gew.-% Polyestercopolymeres (Ethylenterephthalat 90 Mol-%, Ethylenisophthalat 10 Mol-% der Fa. KoSa) und 1,0 Gew.-% Kieselsäurepartikel (Sylysia® 320 von der Fa. Fuji/Japan) mit einem $d_{50}$-Wert von 2,5 µm |

Die Herstellungsbedingungen in den einzelnen Verfahrensschritten sind wie folgt:

| Extrusion | max. Temperatur | | 270 °C |
|---|---|---|---|
| | Temperatur der Abzugswalze | | 25 °C |
| Längsstreckung | Längsstreckverhältnis | $\lambda_{MDO}$ | 4,2 |
| | | $\lambda_1$ | 1,83 |
| | Strecktemperatur beim | 1. Strecken | 112 °C |
| | | $\lambda_2$ | 2,3 |
| | Strecktemperatur beim | 2. Strecken | 106 °C |
| | Aufheiztemperatur | 1. Walze | 70 °C |
| | | letzte Walze | 112 °C |
| Querstreckung | Strecktemperatur | Anfang | 105 °C |
| | | Ende | 127 °C |
| | Querstreckverhältnis | | 3,8 |
| Fixierung | Temperatur | | 225 °C |
| | Dauer | | 3 s |

Die Oberfläche der Folie hatte den geforderten hohen Glanz, die Folie die geforderte niedrige Trübung, die geforderte niedrige OTR und die geforderten hohen mechanischen Festigkeiten. Weiterhin konnte die Folie sehr gut, d. h. abrissfrei, hergestellt werden und zeigte außerdem das gewünschte Verarbeitungsverhalten (u. a. gute Wickelqualität wie z. B. keine Blockpickel, keine Längsrillen, keine hohen Kanten). Der Kontaktwinkel zu Wasser betrug 63,8°. Die Folie wurde auf ihre reprografische Haftung gcprüft und ergab eine gute Haftung.

**Beispiel 3**

Im Vergleich zu Beispiel 1 wurde das Mischungsverhältnis von MXD6 und Polyethylenterephthalat geändert. In diesem Beispiel wurden Chips aus Polyethylenterephthalat und Poly(m-xylol-adipinamid) (MXD6) getrocknet, in einem Mischungsverhältnis von 85:15 dem Extruder (Zweischneckenextruder) zugeführt und durch Extrusion eine einschichtige Folie hergestellt. Die Folie wurde in Längsrichtung (zweistufig) und in Querrichtung verstreckt, und es wurde eine transparente Folie mit einer Gesamtdicke von 12 µm erhalten.

Die Folie wurde ähnlich wie in Beispiel 2 hergestellt. Eine wässrige Dispersion mit 6 Gew.-% Copolyester, bestehend aus 95 Mol-% Isophthalat, 5 Mol-% Na-5-Sulfoisophtalat und 100 Mol-% Ethylenglykol, und 0,56 Gew.-% kolloidalem $SiO_2$ wurde nach dem folgenden Verfahren als Beschichtung auf die Polyesterfolie aufgebracht:

Die längsgestreckte Folie wurde durch Reversgravurbeschichtung auf einer Seite mit der oben beschriebenen Copolyesterdispersion beschichtet.

Die biaxial gestreckte Folie wurde bei 230 °C thermofixiert. Das Trockengewicht der Beschichtung betrug ca. 0,30 g/m² bei einer Beschichtungsdicke von etwa 0,025 µm.

Folienaufbau

15 Gew.-%    Poly(m-xylol-adipinamid) (MXD6) der Fa. Mitsubishi Gas Chemical Co., Produktname Nylon MXD6 6007, mit einer Schmelzviskosität von 5000 Poise

75 Gew.-%    Polyethylenterephthalat 4023 der Fa. KoSa, Deutschland, mit einem SV-Wert von 800

10 Gew.-%    Polyesterrohstoff von Fa. KoSa mit einem SV-Wert von 800, bestehend aus 99 Gew.-% Polyethylenterephthalat 4023 der Fa. KoSa und 1,0 Gew.-% Kieselsäurepartikel (Sylysia® 320 von der Fa. Fuji/Japan) mit einem $d_{50}$-Wert von 2,5 µm

Die Herstellungsbedingungen in den einzelnen Verfahrensschritten sind wie folgt:

| | | | |
|---|---|---|---|
| Extrusion | max. Temperatur | | 280 °C |
| | Temperatur der Abzugswalze | | 25 °C |
| Längsstreckung | Längsstreckverhältnis | $\lambda_{MDO}$ | 3,8 |
| | | $\lambda_1$ | 1,65 |
| | Strecktemperatur beim | 1. Strecken | 115 °C |
| | | $\lambda_2$ | 2,3 |
| | Strecktemperatur beim | 2. Strecken | 113 °C |
| | Aufheiztemperatur | 1. Walze | 70 °C |
| | | letzte Walze | 115 °C |
| Querstreckung | Strecktemperatur | Anfang | 110 °C |
| | | Ende | 137 °C |
| | Querstreckverhältnis | | 3,8 |
| Fixierung | Temperatur | | 230 °C |
| | Dauer | | 3 s |

Die Oberfläche der Folie hatte den geforderten hohen Glanz, die Folie die geforderte niedrige Trübung, die geforderte niedrige OTR und die geforderten hohen mechanischen Festigkeiten. Weiterhin konnte die Folie sehr gut, d. h. abrissfrei, hergestellt werden und zeigte außerdem das gewünschte Verarbeitungsverhalten wie in den Beispielen zuvor. Der Kontaktwinkel zu Wasser betrug 57°.

Zwei Proben der so hergestellten einseitig beschichteten Folie wurden in einen Vakuumlaborbeschichter eingebracht, und zwar so, dass bei der einen Probe die beschichtete und bei der anderen die unbeschichtete Seite metallisiert wurde. Die Vakuumkammer wurde bis auf unter 10 Torr evakuiert, und von einem Wolframfaden wurden etwa 500 ANGSTROM Aluminium sowohl auf die unbeschichtete Seite als auch auf die beschichtete Probe aufgedampft.

Innerhalb von 30 s nach Entnahme aus der Vakuumkammer wurde jede Probe auf "Metallabrieb" geprüft. Zu diesem Zweck wurde an jeder untersuchten Probe mit einem Baumwollvlies mit der gleichen Anzahl von Strichen und in etwa mit dem gleichen Druck leicht über die Metalloberfläche gerieben. Das "Abriebverhalten" der beschichteten Seite der Folie wurde als gut bewertet.

**Beispiel 4**

Im Vergleich zu Beispiel 1 wurde das Mischungsverhältnis von MXD6 und Polyethylenterephthalat geändert. In diesem Beispiel wurden Chips aus Polyethylenterephthalat und Poly(m-xylol-adipinamid) (MXD6) getrocknet, in einem Mischungsverhältnis von 75:25 dem Extruder (Zweischneckenextruder) zugeführt und durch Extrusion eine einschichtige Folie hergestellt. Die Folie wurde in Längsrichtung (zweistufig) und in Querrichtung verstreckt, und es wurde eine transparente Folie mit einer Gesamtdicke von 12 μm erhalten.

Die Folie wurde ähnlich wie in Beispiel 1 hergestellt, jedoch ohne Coronabehandlung nach dem biaxialen Strecken. Eine wässrige Dispersion mit 7 Gew.-% Feststoffgehalt, bestehend aus 50 Gew.-% des aromatischen Copolyesters A1 (Copolyester enthaltend 90 Mol-% Terephthalat, 10 % 5-Natriumsulfoisophtalat, 80 Mol-% Ethylenglykol und 20 Mol-% Diethylenglykol), 45 Gew.-% des wasserdispergierbaren Polymers B2 (Polyvinylalkohol mit einem Verseifungsgrad von 88 % und einem Polymerisationsgrad von 1.700) und 5 Gew.-% an inerten Partikeln D1 (kolloidales $SiO_2$ mit einem Partikeldurchmesser von 0,05 μm) wurde nach dem folgenden Verfahren als Beschichtung auf die Polyesterfolie aufgebracht:

Die längsgestreckte Folie wurde auf einer Seite durch Reversgravurbeschichtung mit der oben beschriebenen Copolyesterdispersion beschichtet. Das Trockengewicht der Beschichtung betrug ca. 0,40 g/m² bei einer Beschichtungsdicke von etwa 0,05 μm.

Folienaufbau

25 Gew.-% Poly(m-xylol-adipinamid) (MXD6) der Fa. Mitsubishi Gas Chemical Co., Produktname Nylon MXD6 6007, mit einer Schmelzviskosität von 5000 Poise

65 Gew.-% Polyethylenterephthalat 4023 der Fa. KoSa, Deutschland, mit einem SV-Wert von 800

10 Gew.-% Polyesterrohstoff von Fa. KoSa mit einem SV-Wert von 800, bestehend aus 99 Gew.-% Polyethylenterephthalat 4023 der Fa. KoSa und 1,0 Gew.-% Kieselsäurepartikel (Sylysia® 320 von der Fa. Fuji/Japan) mit einem $d_{50}$-Wert von 2,5 μm

Die Herstellungsbedingungen in den einzelnen Verfahrensschritten sind wie folgt:

| Extrusion | max. Temperatur | | 280 °C |
|---|---|---|---|
| | Temperatur der Abzugswalze | | 25 °C |
| Längsstreckung | Längsstreckverhältnis | $\lambda_{MDO}$ | 3,7 |
| | | $\lambda_1$ | 1,61 |
| | Strecktemperatur beim | 1. Strecken | 118 °C |
| | | $\lambda_2$ | 2,3 |
| | Strecktemperatur beim | 2. Strecken | 115 °C |
| | Aufheiztemperatur | 1. Walze | 70 °C |

(fortgesetzt)

| | | letzte Walze | 118 °C |
|---|---|---|---|
| Querstreckung | Strecktemperatur | Anfang | 110 °C |
| | | Ende | 139 °C |
| | Querstreckverhältnis | | 3,8 |
| Fixierung | Temperatur | | 230 °C |
| | Dauer | | 3 s |

Die Oberfläche der Folie hatte den geforderten hohen Glanz, die Folie die geforderte niedrige Trübung, die geforderte niedrige OTR und die geforderten hohen mechanischen Festigkeiten. Weiterhin konnte die Folie sehr gut, d. h. abrissfrei, hergestellt werden und zeigte außerdem das gewünschte Verarbeitungsverhalten wie in den Beispielen zuvor.
Der Kontaktwinkel zu Wasser war kleiner als 50°.

Zur Beurteilung der Haftvermittlerwirkung der Beschichtung wurde eine wässrige Polyvinylacetal-Lösung (S-Lec KX-1, hergestellt von Sekisui Chemical Co., Ltd, Japan, im folgenden als KX-1 bezeichnet) auf die beschichtete Folie aufgebracht und getrocknet. Die Beschichtungslösung hatte eine Konzentration von 8 Gew.-% und wurde mit einem Applikator vom Baker-Typ mit einer Schichtdicke von 127 nm aufgebracht. Die beschichtete Folie wurde unverzüglich zum Trocknen bei 100 °C für 4 Minuten in einen Ofen gestellt. Ein schwarzes Quadrat (Fläche: 12 x 12 cm) wurde mit einem Ink-jet-Drucker (BJC-600J, Canon Inc.) auf die Oberfläche der getrockneten KX-1 Beschichtung gedruckt und für 12 Stunden bei 23 °C und 50 % relativer Luftfeuchtigkeit unter Luft getrocknet. Ein Klebeband (Cellotape, Nichiban Inc. Breite: 18 mm) wurde auf die bedruckte Fläche geklebt und schnell abgezogen. Der Grad der mit dem Klebeband abgetrennten bedruckten Oberfläche wurde visuell bestimmt. Die beschichtete Folie zeigte gute Hafteigenschaften.

**Vergleichsbeispiel**

Es wurde eine Folie entsprechend Beispiel 1 der JP 2001-001399 hergestellt. Die Rauigkeitswerte dieser Folie sind zu hoch, der Glanz der Folie und insbesondere die mechanischen Eigenschaften liegen nicht im erfindungsgemäßen Bereich. Außerdem zeigt die aufgewickelt Rolle Blockpickel (Punkte, auf denen die Folienlagen verblockt sind) infolge nichtvorhandener Füllstoffe innerhalb der Folie.

Die Eigenschaften und der Aufbau der gemäß den Beispielen und den Vergleichsbeispielen (VB) hergestellten Folien sind in Tabelle 2 zusammengestellt.

**Tabelle 2**

| | | Folien-dicke | Folien-aufbau | MXD6-Anteil in Folie | Trübung | Glanz beider Oberflächen | E-Modul in | | Reißfestigkeit | | Reißdehnung | | OTR | Rauigkeit der beiden Oberflächen | Reibung der beiden Oberflächen |
|---|---|---|---|---|---|---|---|---|---|---|---|---|---|---|---|
| | | | | | | | MDO | TDO | MDO | TDO | MDO | TDO | | | |
| | | $\mu$m | | % | % | | N/mm$^2$ | | N/mm$^2$ | | % | | cm$^3$/m$^2$·bar·d | $\mu$m | % |
| B e i s p i e l e | 1 | 12 | B | 10 | 5 | 130 | 4800 | 5200 | 170 | 220 | 100 | 80 | 40 | 70 | 0,42 |
| | 2 | 12 | B (IPA) | 10 | 4 | 140 | 4600 | 5000 | 160 | 200 | 120 | 90 | 42 | 60 | 0,46 |
| | 3 | 12 | B | 15 | 6 | 130 | 4900 | 5400 | 180 | 230 | 120 | 95 | 35 | 75 | 0,42 |
| | 4 | 12 | B | 25 | 7 | 130 | 4900 | 5500 | 190 | 230 | 120 | 95 | 15 | 75 | 0,4 |
| VB | 1 | 12 | B | 20 | 8 | 75 | 3300 | 3400 | 150 | 160 | 130 | 100 | 22 | 100 | >1 |

# EP 1 609 813 A1

**Patentansprüche**

1. Biaxial orientierte Polyesterfolie, welche

   a) Poly(m-xylol-adipinamid) (MXD6) enthält,
   b) einen Elastizitätsmodul (E-Modul) von mindestens 3500 N/mm$^2$ in beiden Orientierungsrichtungen aufweist und
   c) zumindest eine haftvermittelnde Oberfläche aufweist.

2. Polyesterfolie nach Anspruch 1, **dadurch gekennzeichnet, dass** sie Füllstoffe enthält.

3. Polyesterfolie nach Anspruch 1 oder 2, **dadurch gekennzeichnet**, das sie 5-45 Gew.-% Poly(m-xylol-adipinamid) enthält.

4. Polyesterfolie nach einem oder mehreren der Ansprüche 1 bis 3, **dadurch gekennzeichnet, dass** die Schmelzviskosität des Poly (m-xylol-adipinamid) kleiner als 6000 Poise ist.

5. Polyesterfolie nach einem oder mehreren der Ansprüche 1 bis 4, **dadurch gekennzeichnet, dass** sie 0,02 bis 1 Gew.-% Füllstoffe enthält.

6. Polyesterfolie nach einem oder mehreren der Ansprüche 1 bis 5, **dadurch gekennzeichnet, dass** sie mindestens 55 Gew.-% thermoplastischen Polyester enthält.

7. Polyesterfolie nach einem oder mehreren der Ansprüche 1 bis 6, **dadurch gekennzeichnet, dass** der thermoplastische Polyester Terephthalsäure- und/oder Isophthalsäure- und/oder Naphthalin-2,6-dicarbonsäure-Einheiten aufweist.

8. Polyesterfolie nach einem oder mehreren der Ansprüche 1 bis 7, **dadurch gekennzeichnet, dass** der thermoplastische Polyester Isophthalsäure-, Terephthalsäure- und Ethylenglykol-Einheiten aufweist.

9. Polyesterfolie nach einem oder mehreren der Ansprüche 1 bis 8, **dadurch gekennzeichnet, dass** als thermoplastischer Polyester Polyethylenterephthalat verwendet wird.

10. Polyesterfolie nach einem oder mehreren der Ansprüche 1 bis 9, **dadurch gekennzeichnet, dass** sie aus einer Basisschicht (B) und aus einer oder zwei Deckschichten (A) und (C) besteht, wobei die Deckschichten (A) und (C) gleich oder verschieden sein können.

11. Polyesterfolie nach einem oder mehreren der Ansprüche 1 bis 10, **dadurch gekennzeichnet, dass** die Deckschichten (A) und/oder (C) den für die Basisschicht (B) verwendeten thermoplastischen Polyester enthalten.

12. Polyesterfolie nach einem oder mehreren der Ansprüche 1 bis 11, **dadurch gekennzeichnet, dass** als Polymer für die Deckschichten (A) und/oder (C) Polyethylenterephthalat oder ein Polyestercopolymer verwendet wird, das Isophthalsäure-, Terephthalsäure- und Ethylenglykol-Einheiten aufweist.

13. Polyesterfolie nach einem oder mehreren der Ansprüche 1 bis 12, **dadurch gekennzeichnet, dass** die haftvermittelnde Oberfläche durch Corona- oder Flammbehandlung und/oder durch eine haftvermittelnde Beschichtung erzeugt wird.

14. Polyesterfolie nach einem oder mehreren der Ansprüche 1 bis 13, **dadurch gekennzeichnet, dass** die haftvermittelnde Oberfläche eine haftvermittelnde Beschichtung ist.

15. Polyesterfolie nach einem oder mehreren der Ansprüche 1 bis 14, **dadurch gekennzeichnet, dass** die haftvermittelnde Beschichtung eine Copolyester- oder Acrylatbeschichtung ist.

16. Polyesterfolie nach einem oder mehreren der Ansprüche 1 bis 15, **dadurch gekennzeichnet, dass** die haftvermittelnde Folienoberfläche einen Kontaktwinkel zu Wasser von kleiner als 64° aufweist.

17. Polyesterfolie nach einem oder mehreren der Ansprüche 1 bis 16, **dadurch gekennzeichnet, dass** sie einen Glanz von größer als 80 aufweist.

**18.** Polyesterfolie nach einem oder mehreren der Ansprüche 1 bis 17, **dadurch gekennzeichnet, dass** sie bei einer Dicke von 12 μm eine Sauerstoffdurchlässigkeit (OTR) von kleiner als 45 $cm^3 \cdot m^{-2} \cdot d^{-1} \cdot bar^{-1}$ aufweist.

**19.** Polyesterfolie nach einem oder mehreren der Ansprüche 1 bis 18, **dadurch gekennzeichnet, dass** sie eine Trübung von kleiner als 20 % aufweist.

**20.** Polyesterfolie nach einem oder mehreren der Ansprüche 1 bis 19, **dadurch gekennzeichnet, dass** bei der Herstellung das sequenzielle Streckverfahren eingesetzt wird.

**21.** Verfahren zur Herstellung einer Polyesterfolie nach einem oder mehreren der Ansprüche 1 bis 20 umfassend die Schritte

 a) Herstellen der Folie durch Extrusion oder Koextrusion,
 b) sequenzielles Strecken der Folie,
 c) Erzeugen der haftvermittelnden Oberfläche und
 d) Thermofixieren der gestreckten Folie.

**22.** Verfahren nach Anspruch 21, **dadurch gekennzeichnet, dass** die Folie zunächst in Maschinenrichtung und dann in Querrichtung verstreckt wird.

**23.** Verfahren nach Anspruch 21 oder 22, **dadurch gekennzeichnet, dass** die Streckung in Maschinenrichtung in 2 Stufen erfolgt.

**24.** Verfahren nach einem oder mehreren der Ansprüche 21 bis 23, **dadurch gekennzeichnet, dass** die haftvermittelnde Oberfläche durch Corona- oder Flammbehandlung und/oder durch eine haftvermittelnde Beschichtung erzeugt wird.

**25.** Verwendung einer Polyesterfolie nach einem oder mehreren der Ansprüche 1 bis 20 als Verpackungsmaterial, insbesondere für Nahrungs- und Genussmittel.

Polyester + MXD6

## Fig. 1

A-Polyester (+MXD6)

B-Polyester + MXD6

C-Polyester (+MXD6)

## Fig. 2

$\lambda_{MD}$

## Fig. 3

70    70    80    85    90    90

$\lambda_1$    $\lambda_2$    $\lambda_{MD} = \lambda_1 \cdot \lambda_2$

## Fig. 4

70    80    85    90    105    110  110

**EP 1 609 813 A1**

| Europäisches Patentamt | **EUROPÄISCHER RECHERCHENBERICHT** | Nummer der Anmeldung EP 05 01 3096 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,X | PATENT ABSTRACTS OF JAPAN<br>Bd. 2000, Nr. 16, 8. Mai 2001 (2001-05-08)<br>& JP 2001 001399 A (UNITIKA LTD),<br>9. Januar 2001 (2001-01-09)<br>* Zusammenfassung *<br>----- | 1-19,25 | C08J7/04<br>C08J5/18 |

RECHERCHIERTE SACHGEBIETE (Int.Cl.7)

C08J
C08L

Der vorliegende Recherchenbericht wurde für alle Patentansprüche erstellt

| Recherchenort | Abschlußdatum der Recherche | Prüfer |
|---|---|---|
| Den Haag | 11. Oktober 2005 | Schlicke, B |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes
    Dokument

EPO FORM 1503 03.82 (P04C03)

21

**ANHANG ZUM EUROPÄISCHEN RECHERCHENBERICHT**
**ÜBER DIE EUROPÄISCHE PATENTANMELDUNG NR.**

EP 05 01 3096

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-10-2005

| Im Recherchenbericht angeführtes Patentdokument | Datum der Veröffentlichung | Mitglied(er) der Patentfamilie | Datum der Veröffentlichung |
|---|---|---|---|
| JP 2001001399    A | 09-01-2001 | KEINE | |

EPO FORM P0461

Für nähere Einzelheiten zu diesem Anhang : siehe Amtsblatt des Europäischen Patentamts, Nr.12/82